# FASCICULE DE BREVET EUROPEEN

(11) **EP 4 083 468 B1**
(45) Date de publication et mention de la délivrance du brevet: **08.07.2026**
(21) Numéro de dépôt: 22169997.8
(22) Date de dépôt: 26.04.2022
(51) Int. Cl.: F16F 15/08

(54) **SYSTÈME DE DÉCOUPLAGE DE VIBRATIONS ENTRE UN COMPOSANT ET UNE SURFACE DE MONTAGE, ASSEMBLAGE ET PROCÉDÉ DE MONTAGE ASSOCIÉS**
SYSTEM ZUR ENTKOPPLUNG VON SCHWINGUNGEN ZWISCHEN EINEM BAUTEIL UND EINER MONTAGEFLÄCHE, ENTSPRECHENDE BAUGRUPPE UND ENTSPRECHENDES MONTAGEVERFAHREN
SYSTEM FOR UNCOUPLING VIBRATIONS BETWEEN A COMPONENT AND A MOUNTING SURFACE, ASSOCIATED ASSEMBLY AND MOUNTING METHOD

(30) Priorité: 27.04.2021 FR 2104365
(43) Date de publication de la demande: 02.11.2022
(73) Titulaire: SpeedInnov, 75008 Paris (FR)
(72) Inventeur: BERNARD, Alexandre, 17340 CHATELAILLON PLAGE (FR); CUNY, Nathalie, 17180 PERIGNY (FR)
(74) Mandataire: Plasseraud IP

(56) Documents cités:
- EP-A1- 1 175 308
- EP-B1- 1 175 308
- WO-A1-2016/034612
- FR-A1- 2 925 235
- KR-A- 20000 021 779
- US-A1- 2008 149 764

## Description

La présente invention concerne un système de découplage de vibrations entre un composant et une surface de montage, le système de découplage comprenant :
- une platine de fixation configurée pour être fixée sur la surface de montage, la platine présentant une première face destinée à être placée en regard de la surface de montage et une deuxième face opposée, lesdites faces s'étendant sensiblement parallèlement à un plan principal, et
- un plot de découplage disposé en regard de la deuxième face de la platine et dans lequel est ménagé un logement destiné à recevoir un moyen de fixation pour fixer le composant au système de découplage, le plot étant réalisé en un matériau propre à amortir des vibrations du moyen de fixation.

La présente invention concerne également un assemblage de découplage comprenant un tel système de découplage, ainsi qu'un procédé de montage d'un tel assemblage de découplage.

Dans le domaine des systèmes de fixation mécanique, il est bien connu d'utiliser des systèmes de découplage pour éviter que des vibrations ne se transmettent d'un élément à un autre.

C'est le cas notamment dans les véhicule, par exemple dans les véhicules de transport public. De tels véhicules de transport public connus comprennent au moins une caisse formant une structure pour un habitacle destiné à recevoir des passagers et/ou des marchandises. Un habillage intérieur est généralement agencé sur un côté intérieur de la caisse pour le confort et la sécurité des passagers.

La caisse est sujette à des vibrations lors de l'exploitation du véhicule. Pour découpler les vibrations de la caisse par rapport à l'habillage intérieur, des systèmes de découplage de vibrations sont utilisés, tels que des plots de découplage en caoutchouc disposés sur une platine fixée à l'habillage intérieur.

Cependant, de tels systèmes connus sont complexes à installer. Il est notamment difficile d'ajuster la position du système de découplage par rapport à l'élément de caisse. De nombreuses pièces complémentaires sont alors nécessaires pour relier convenablement le système de découplage et l'élément de caisse.

Ces nombreuses pièces nécessitent des opérations de montage longues et représentent des coûts logistiques importants.

US 2008/0149764 décrit un système d'assemblage d'un siège au plancher d'un véhicule.

Un but de la présente invention est ainsi d'obtenir un système de découplage qui soit facile et rapide à installer, tout en présentant une structure simple.

A cet effet, l'invention a pour objet un système de découplage de vibrations selon la revendication 1.

Le support intermédiaire facilite le positionnement du système de découplage, tout en évitant l'utilisation de nombreuses pièces complémentaires.

Un système de découplage selon l'invention peut comporter en outre l'une ou plusieurs des caractéristiques des revendications 2 à 6.

L'invention a également pour objet un assemblage de découplage selon la revendication 7.

Selon un mode de réalisation particulier, l'assemblage est selon la revendication 8.

L'invention a également pour objet un procédé de montage selon la revendication 9.

L'invention sera mieux comprise à la lumière de la description qui va suivre, donnée uniquement à titre d'exemple non limitatif et faite en se référant aux figures annexées, parmi lesquelles :
[Fig 1] La Figure 1 est une vue schématique, en coupe, d'un assemblage de découplage selon la présente invention, l'assemblage comprenant un système de découplage ; et
[Fig 2] La Figure 2 est une vue en perspective du système de découplage de la figure 1.

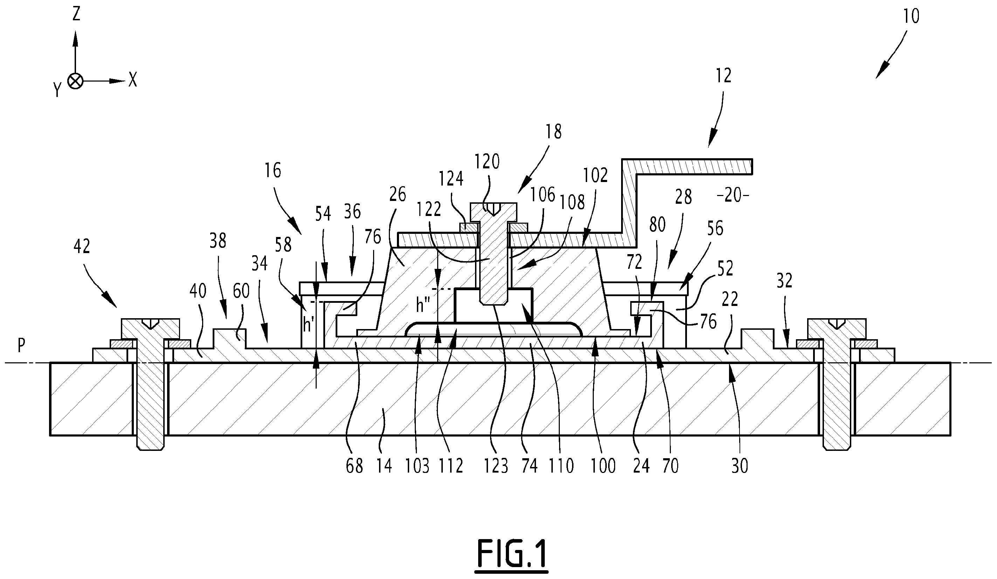

On a représenté, sur la figure 1, un assemblage de découplage 10 comprenant un composant 12, une surface de montage 14 et un système de découplage 16 de vibrations. L'assemblage de découplage 10 comprend en outre un moyen de fixation 18 du composant 12 au système de découplage 16.

Par exemple, un tel assemblage 10 est destiné à être installé dans un véhicule, notamment dans un véhicule de transport public. Le véhicule de transport public est par exemple un véhicule ferroviaire, un véhicule terrestre guidé, un autobus ou un véhicule naval.

Dans un mode de réalisation particulier, l'un parmi le composant 12 et la surface de montage 14 est un élément de caisse du véhicule et l'autre est un élément d'habillage intérieur dudit véhicule.

Dans l'exemple de la figure 1, le composant 12 est un élément de caisse et la surface de montage 14 est un élément d'habillage intérieur.

Par exemple, le composant 12 est un élément d'une paroi latérale, d'un toit ou d'un plancher du véhicule, et la surface de montage 14 est un panneau de type « nid d'abeille », par exemple en métal, notamment en aluminium.

En variante, le composant 12 est une pièce intermédiaire destinée à relier l'élément de caisse au système de découplage 16.

Le composant 12 et la surface de montage 14 définissent entre eux un espace intermédiaire 20 dans lequel est reçu le système de découplage 16 de vibrations.

Le système de découplage 16 de vibrations, aussi appelé système de découplage 16, est configuré pour découpler des vibrations du composant 12 par rapport à la surface de montage 14, et inversement.

Par « découplage » et « découpler », il est entendu que des vibrations sont au moins partiellement atténuées entre les éléments reliés par le système de découplage 16. Par exemple, lorsque le composant 12 reçoit des vibrations, ces vibrations sont au moins partiellement atténuées par le système de découplage 16 par rapport à la surface de montage 14. Par exemple, le système de découplage 16 est configuré pour atténuer des gammes de fréquences prédéfinies.

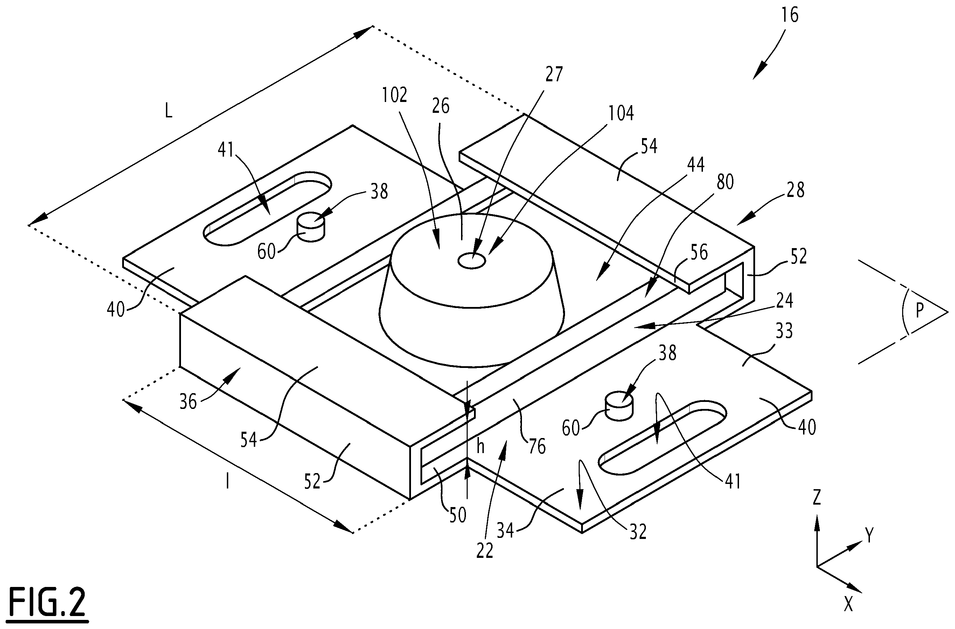

Un système de découplage 16 selon l'invention est représenté plus en détails sur la figure 2.

Le système de découplage 16 comprend une platine 22 de fixation configurée pour être fixée sur la surface de montage 14, un support intermédiaire 24 disposé sur la platine de fixation 22, et un plot 26 de découplage dans lequel est ménagé un logement 27 destiné à recevoir le moyen de fixation 18.

Le système de découplage 16 comprend en outre au moins un moyen de retenue 28, propre à bloquer en translation le support intermédiaire 24 par rapport à la platine 22 de fixation selon une direction d'extension Z du système de découplage 16 qui sera définie ultérieurement.

La platine 22 de fixation présente une première face 30 destinée à être placée en regard de la surface de montage 14 et une deuxième face 32 opposée. Lesdites première et deuxième faces 30, 32 s'étendent sensiblement parallèlement à un plan principal P.

La platine 22 est fixée à la surface de montage 14, de sorte que la première face 30 soit en contact avec ladite surface de montage 14.

On définit également une direction longitudinale X et une direction transversale Y du plan principal P, lesdites directions X, Y étant perpendiculaires entre elles. La direction d'extension Z est perpendiculaire auxdites directions X, Y.

La platine 22 est par exemple formée d'une tôle 33 en métal, notamment en aluminium.

La platine 22 comprend un support de fixation 34 et une cage de retenue 36 propre à bloquer en translation le support intermédiaire 24 selon la direction d'extension Z. De préférence, la platine 22 comprend en outre des moyens de butée 38 propres à bloquer en translation le support intermédiaire 24 selon la direction longitudinale X.

Selon le mode de réalisation représenté sur les figures 1 et 2, le support de fixation 34 comprend deux pattes de fixation 40 disposées de part et d'autre de la cage de retenue 36 selon la direction longitudinale X.

Chaque patte de fixation 40 présente un orifice 41 traversant destiné à recevoir un moyen d'attache 42, par exemple une vis accompagnée optionnellement d'une rondelle, de manière à fixer la platine 22 sur la surface de montage 14.

De préférence, l'orifice 41 est de forme oblongue et s'étend en longueur selon la direction transversale Y. De la sorte, il est possible de régler facilement la position de la platine 22, et plus largement du système de découplage 16, selon la direction transversale Y sur la surface de montage 14.

La cage de retenue 36 présente une ouverture 44 configurée pour laisser passer le moyen de fixation 18, et optionnellement le plot 26.

La cage de retenue 36 est par exemple en forme de C selon un plan défini par les directions transversale Y et d'extension Z.

La cage de retenue 36 comprend par exemple une base 50 s'étendant parallèlement au plan principal P, deux flancs 52 reliés à des extrémités opposées de la base 50, et deux parties terminales 54 reliées chacune à l'un des deux flancs 52.

Les deux flancs 52 s'étendent par exemple chacun selon la direction longitudinale X et selon la direction d'extension Z.

Les deux parties terminales 54 s'étendent par exemple parallèlement à la base 50 et comportent chacune un bord libre 56 faisant face l'un à l'autre. De préférence, l'ouverture 44 est délimitée par les bords libres 56 des deux parties terminales 54.

La cage de retenue 36 est par exemple obtenue par pliage de bords de la tôle 33, comme cela sera décrit ultérieurement.

La cage de retenue 36, et en particulier la base 50, les deux flancs 52 et les deux parties terminales 54 définissent une rainure de réception 58 s'étendant selon une direction principale parallèle à la direction longitudinale X.

La rainure de réception 58 est adaptée pour recevoir au moins en partie le support intermédiaire 24.

Par exemple, la rainure de réception 58 présente une longueur l, mesurée selon la direction longitudinale X, comprise entre 40 mm et 80 mm, par exemple égale à 60 mm.

Par exemple, la rainure de réception 58 présente une largeur L, mesurée selon la direction transversale Y, comprise entre 8 mm et 20 mm, par exemple égale à 12 mm.

Par exemple, la rainure de réception 58 présente une hauteur h, mesurée selon la direction d'extension Z, comprise entre 4 mm et 12 mm, par exemple égale à 8 mm.

De préférence, comme représenté sur les figures 1 et 2, les moyens de butée 38 font saillie par rapport à la deuxième face 32 de la platine 22, au niveau des pattes de fixation 40. Par exemple, les moyens de butée 38 comportent au moins deux pions 60, portés par la platine 22 et disposés de part et d'autre de la cage de retenue 36, chaque pion 60 étant sur l'une respective des pattes de fixation 40.

Les moyens de butée 38 sont destinés à limiter le déplacement du support intermédiaire 24 selon la direction longitudinale X. Les pions 60 sont espacés l'un de l'autre d'une distance comprise entre 50 mm et 100 mm, par exemple égale à 75 mm, selon la direction longitudinale X, autorisant un débattement du support intermédiaire 24 selon la direction longitudinale X compris entre 12 mm et 17 mm, par exemple égal à 14,5 mm.

Le support intermédiaire 24 est monté mobile en translation par rapport à la platine 22 selon la direction longitudinale X.

Le support intermédiaire 24 forme un profilé mâle destiné à coopérer avec la cage de retenue 36. La cage de retenue 36 et le support intermédiaire 24 forment ainsi un système de glissière selon la direction longitudinale X, le support intermédiaire 24 étant configuré pour coulisser dans la rainure de réception 58 de la cage 36.

Le support intermédiaire 24 comprend une plaque 68 présentant une première face 70 destinée à être placée en regard de la platine 22 et une deuxième face 72 opposée. Lesdites première et deuxième faces 70, 72 s'étendent sensiblement parallèlement au plan principal P.

Le support intermédiaire 24 est par exemple formé d'une tôle en métal, notamment en aluminium. Dans l'exemple représenté sur les figures 1 et 2, le support intermédiaire 24 est obtenu par pliage de ladite tôle.

Le support intermédiaire 24 comprend par exemple une base 74 et deux flancs 76 reliés à des extrémités opposées de la base 74 selon la direction longitudinale X. Les flancs 76 s'étendent par exemple parallèlement l'un par rapport à l'autre selon la direction transversale Y et selon la direction d'extension Z.

Les deux flancs 76 comportent chacune une face d'appui 80 s'étendant parallèlement à la base 74 et destinée à coopérer avec les parties terminales 54 de la cage de retenue 36.

Le support intermédiaire 24, et plus particulièrement les flancs 76, présentent une hauteur h', mesurée selon la direction d'extension Z, sensiblement égale à la hauteur h de la rainure de réception 58. Il est entendu ici par « sensiblement égale » que la première face 70 du support intermédiaire 24 est en contact avec la deuxième face 32 de la base 50 de la platine 22 et que les faces d'appui 80 du support intermédiaire 24 sont en contact avec les parties terminales 54 de la cage de retenue 36, seul subsistant un léger jeu selon la direction d'extension Z permettant le coulissement du support intermédiaire 24 dans la rainure de réception 58.

Le plot 26 de découplage est disposé sur le support intermédiaire 24. Le plot 26 est par exemple collé sur la deuxième face 72 de la base 74 du support intermédiaire 24.

Le plot 26 s'étend selon la direction d'extension Z entre une première base 100 disposée en regard du support intermédiaire 24 et une deuxième base 102 opposée.

Dans l'exemple représenté sur les figures 1 et 2, le plot 26 est de forme tronconique, la première base 100 présentant un diamètre supérieur au diamètre de la deuxième base 102. En variante, le plot 26 est de forme cylindrique. D'autres formes de plots sont envisageables.

Le plot 26 présente un logement 27 interne destiné à recevoir le moyen de fixation 18 pour fixer le composant 12 au système de découplage 16. De préférence, le plot 26 comprend en outre une entretoise 106 disposée dans le logement 27.

Par exemple, comme représenté sur les figures 1 et 2, le logement 27 est traversant et débouche à la fois sur la première base 100 et sur la deuxième base 102 au niveau respectivement d'une première ouverture 103 et d'une deuxième ouverture 104. En variante, le logement 27 ne débouche que sur la deuxième face 102.

De préférence, comme représenté sur la figure 1, le logement 27 présente une première partie 108 et une deuxième partie 110.

La première partie 108 est configurée pour coopérer avec le moyen de fixation 18 et présente ainsi une forme sensiblement complémentaire dudit moyen de fixation 18. Lorsque celle-ci est présente, la première partie 108 est configurée pour recevoir l'entretoise 106, le moyen de fixation 18 étant reçu, par exemple vissé, dans ladite entretoise 106.

La deuxième partie 110 définit une cavité d'air contribuant à l'amortissement des vibrations du moyen de fixation 18. La deuxième partie 110 présente un diamètre plus grand que le diamètre de la première partie 108.

La deuxième partie 110 présente une hauteur h", mesurée selon la direction d'extension Z, comprise entre 4 mm et 6 mm, par exemple égale à 5 mm. La deuxième partie 110 présente une section normale à la direction d'extension Z, ladite section présentant une aire entre 10% et 20%, par exemple 16,5%, de l'aire de la section du plot 26.

Avantageusement, le plot 26 présente en outre un évidement 112 au niveau de la première base 100, le logement 27 débouchant dans ledit évidement 112. Un tel évidement facilite la fabrication du plot, et notamment son retrait du moule.

Le plot 26 est réalisé en un matériau propre à amortir des vibrations du moyen de fixation 18. Par exemple, le plot 26 est réalisé en matériau polymère, de préférence en caoutchouc, notamment en caoutchouc éthylène-propylène-diène monomère, également appelé caoutchouc EPDM.

Le plot 26 est de préférence collé sur la deuxième face 72 du support intermédiaire 24.

Lorsqu'elle est présente, l'entretoise 106 est en forme de tube. L'entretoise 106 est de préférence en métal. L'entretoise 106 présente avantageusement un filetage interne destiné à coopérer avec le moyen de fixation 18.

Le moyen de fixation 18 comporte une tête 120 et une tige 122 faisant saillie de la tête jusqu'à une extrémité 123 reçue dans le logement 27 du plot 26.

Le moyen de fixation 18 est par exemple formé par une vis. De préférence, l'assemblage 10 comprend en outre au moins une rondelle 124, réalisée en métal ou en matériau plastique, notamment en élastomère, enserrée entre la tête 120 du moyen de fixation 18 et le composant 12.

La tige 122 s'étend à travers une ouverture ménagée dans le composant 12 et est reçue au moins dans la première partie 108 du logement 27.

Avantageusement, la tige 122 s'étend seulement partiellement à l'intérieur de la deuxième partie 110 du logement 27. Il est entendu par-là que l'extrémité 123 de la tige 122 se trouve à distance de la deuxième face 72 du support intermédiaire 24. En d'autres termes, l'extrémité 123 de la tige 122 n'est pas en contact avec la deuxième face 72 du support intermédiaire 24. De la sorte, il y a une discontinuité entre le moyen de fixation 18 et le support intermédiaire 24.

On conçoit que le système de découplage 16 selon l'invention présente un certain nombre d'avantages.

Le système de découplage 16 selon l'invention présente une structure simple, tout en permettant de découpler de manière efficace des vibrations du composant 12 par rapport à la surface de montage 14, et inversement.

Le système de découplage 16 permet aussi d'avoir un assemblage 10 particulièrement simple à monter, en facilitant l'ajustement des différents éléments les uns par rapport aux autres.

Un procédé de montage d'un assemblage 10 de découplage va maintenant être décrit.

Le procédé de montage comprend la fixation du composant 12 au plot 26 par insertion du moyen de fixation 18 à l'intérieur du logement 27 du plot 26, et la fixation de la platine 22 à la surface de montage 14.

Le composant 12 est fixé au système de découplage 16, et plus particulièrement au plot 26, en insérant le moyen de fixation 18 à travers l'ouverture ménagée dans le composant 12 et à travers la deuxième ouverture 104 du logement 27, de sorte que le moyen de fixation 18, et plus particulièrement la tige 122, soit reçu à l'intérieur du logement 27.

De préférence, la tige 122 est vissée à l'intérieur du logement 27.

Le serrage du moyen de fixation 18 dans le logement 27 bloque le plot 26 en translation selon la direction longitudinale X, selon le principe d'un système écrou-cage.

Le support intermédiaire 24 facilite ainsi le réglage de la position de la platine 22, et plus largement du système de découplage 16, selon la direction X sur la surface de montage 14.

Puis, la platine 22 est fixée à la surface de montage 14 grâce aux moyens d'attache 42. Lesdits moyens d'attache 42 sont insérés au travers des orifices 41 de la platine 22 et enserrent ladite platine 22, de manière à la bloquer en translation selon la direction transversale Y.

La forme oblongue des orifices 41 facilite le réglage de la position de la platine 22, et plus largement du système de découplage 16, selon la direction Y sur la surface de montage 14. Il est ainsi plus simple de placer en vis-à-vis les orifices 41 avec des ouvertures prévues dans la surface de montage 14.

Le procédé de montage selon l'invention permet un gain de temps de montage important. Notamment, le procédé facilite l'alignement des différents éléments et ne nécessite pas d'installer de nombreuses pièces supplémentaires pour installer convenablement le système de découplage 16 entre le composant 12 et la surface de montage 14.

On notera que l'invention n'est pas limitée au mode de réalisation précédemment décrit, mais pourrait présenter diverses variantes supplémentaires. moyen de fixation 18, et plus particulièrement la tige 122, soit reçu à l'intérieur du logement 27.

De préférence, la tige 122 est vissée à l'intérieur du logement 27.

Le serrage du moyen de fixation 18 dans le logement 27 bloque le plot 26 en translation selon la direction longitudinale X, selon le principe d'un système écrou-cage.

Le support intermédiaire 24 facilite ainsi le réglage de la position de la platine 22, et plus largement du système de découplage 16, selon la direction X sur la surface de montage 14.

Puis, la platine 22 est fixée à la surface de montage 14 grâce aux moyens d'attache 42. Lesdits moyens d'attache 42 sont insérés au travers des orifices 41 de la platine 22 et enserrent ladite platine 22, de manière à la bloquer en translation selon la direction transversale Y.

La forme oblongue des orifices 41 facilite le réglage de la position de la platine 22, et plus largement du système de découplage 16, selon la direction Y sur la surface de montage 14. Il est ainsi plus simple de placer en vis-à-vis les orifices 41 avec des ouvertures prévues dans la surface de montage 14.

Le procédé de montage selon l'invention permet un gain de temps de montage important. Notamment, le procédé facilite l'alignement des différents éléments et ne nécessite pas d'installer de nombreuses pièces supplémentaires pour installer convenablement le système de découplage 16 entre le composant 12 et la surface de montage 14.

On notera que l'invention n'est pas limitée au mode de réalisation précédemment décrit, mais pourrait présenter diverses variantes supplémentaires.

## Revendications

1. Système de découplage (16) de vibrations entre un composant (12) et une surface de montage (14), le système de découplage (16) comprenant :
- une platine (22) de fixation configurée pour être fixée sur la surface de montage (14), la platine (22) présentant une première face (30) destinée à être placée en regard de la surface de montage (14) et une deuxième face (32) opposée, lesdites faces (30, 32) s'étendant sensiblement parallèlement à un plan principal (P), et
- un plot (26) de découplage disposé en regard de la deuxième face (32) de la platine (22) et dans lequel est ménagé un logement (27) destiné à recevoir un moyen de fixation (18) pour fixer le composant (12) au système de découplage (16), le plot (26) étant réalisé en un matériau propre à amortir des vibrations du moyen de fixation (18),
le système de découplage (16) comprend en outre un support intermédiaire (24) sur lequel est fixé le plot (26) de découplage, le support intermédiaire (24) présentant une paroi de fond disposée sur la deuxième face (32) de la platine (22) de fixation, le support intermédiaire (24) étant monté mobile en translation par rapport à la platine (22) de fixation selon une direction longitudinale (X) du plan principal (P), le support intermédiaire (24) comprenant une plaque (68) présentant une première face (70) destinée à être placée en regard de la platine (22) et une deuxième face (72) opposée, lesdites première et deuxième faces (70, 72) s'étendant sensiblement parallèlement au plan principal (P),
le système de découplage (16) comprenant en outre des moyens de retenue (28) propres à bloquer en translation le support intermédiaire (24) par rapport à la platine (22) de fixation selon une direction d'extension (Z) normale au plan principal (P), **caractérisé en ce que**
la platine (22) de fixation comprenant une cage de retenue (36), la cage de retenue (36) définissant une rainure de réception (58) s'étendant selon la direction longitudinale (X) du plan principal (P) et dans laquelle est reçu au moins en partie le support intermédiaire (24), la cage de retenue (36) étant en forme de C selon un plan défini par une direction transversale (Y) du plan principal (P) et par la direction d'extension (Z).

2. Système de découplage (16) selon la revendication 1, dans lequel la cage de retenue (36) et le support intermédiaire (24) forment un système de glissière selon la direction longitudinale (X), le support intermédiaire (24) étant configuré pour coulisser dans la rainure de réception (58) de la cage de retenue (36).

3. Système de découplage (16) selon la revendication 1 ou 2, dans lequel la platine (22) comporte en outre deux moyens de butée (38) disposés de part et d'autre du support intermédiaire (24) selon la direction longitudinale (X), le support intermédiaire (24) étant mobile selon la direction longitudinale (X) entre deux positions extrémales dans lesquelles le support intermédiaire (24) prend appui contre l'un, respectivement l'autre, des moyens de butée (38).

4. Système de découplage (16) selon l'une quelconque des revendications précédentes, dans lequel la platine (22) présente au moins un orifice (41) traversant destiné à recevoir un moyen d'attache (42) de la platine (22) sur la surface de montage (14), l'orifice (41) étant de forme oblongue.

5. Système de découplage (16) selon l'une quelconque des revendications précédentes, dans lequel la platine (22) et le support intermédiaire (24) sont réalisés en matériau métallique, de préférence en aluminium.

6. Système de découplage (16) selon l'une quelconque des revendications précédentes, dans lequel le plot (26) est réalisé en matériau polymère, de préférence en caoutchouc.

7. Assemblage (10) de découplage comprenant :
- un composant (12) présentant une ouverture,
- une surface de montage (14), et
- un système de découplage (16) selon l'une quelconque des revendications 1 à 6, la platine (22) de fixation étant fixée sur la surface de montage (14),
l'assemblage (10) de découplage comprenant en outre un moyen de fixation (18) du composant (12) au système de découplage (16), le moyen de fixation (18) passant à travers l'ouverture du composant (12) et étant reçu dans le logement (27) du plot (26).

8. Assemblage (10) selon la revendication 7, dans lequel l'un du composant (12) et de la surface de montage (14) est un élément de caisse d'un véhicule de transport public et l'autre du composant (12) et de la surface de montage (14) est un élément d'habillage intérieur dudit véhicule.

9. Procédé de montage d'un assemblage (10) de découplage selon la revendication 7 ou 8, comprenant les étapes suivantes:
- fixation du composant (12) au plot (26) par insertion du moyen de fixation (18) à l'intérieur du logement (27) du plot (26); et
- fixation de la platine (22) de fixation à la surface de montage (14).

## Patentansprüche

1. Entkopplungssystem (16) für Vibrationen zwischen einer Komponente (12) und einer Montagefläche (14), wobei das Entkopplungssystem (16) umfasst:
- eine Befestigungsplatte (22), welche dazu eingerichtet ist, an der Montagefläche (14) befestigt zu sein, wobei die Platte (22) eine erste Seite (30), welche dazu vorgesehen ist, gegenüber der Montagefläche (14) platziert zu sein, und eine gegenüberliegende zweite Seite (32) aufweist, wobei sich die Seiten (30, 32) im Wesentlichen parallel zu einer Hauptebene (P) erstrecken, und
- einen Entkopplungsklotz (26), welcher gegenüber der zweiten Seite (32) der Platte (22) angeordnet ist und in welchem eine Aufnahme (27) bereitgestellt ist, welche dazu vorgesehen ist, ein Befestigungsmittel (18) zum Befestigen der Komponente (12) an dem Entkopplungssystem (16) aufzunehmen, wobei der Klotz (26) aus einem Material gefertigt ist, welches dazu geeignet ist, Vibrationen des Befestigungsmittels (18) zu dämpfen,
wobei das Entkopplungssystem (16) ferner einen Zwischenträger (24) umfasst, an welchem der Entkopplungsklotz (26) befestigt ist, wobei der Zwischenträger (24) eine Bodenwand aufweist, welche an der zweiten Seite (32) der Befestigungsplatte (22) angeordnet ist, wobei der Zwischenträger (24) in Translation beweglich bezüglich der Befestigungsplatte (22) gemäß einer longitudinalen Richtung (X) der Hauptebene (P) montiert ist, wobei der Zwischenträger (24) eine Scheibe (68) umfasst, welche eine erste Seite (70), welche dazu vorgesehen ist, gegenüber der Platte (22) platziert zu sein, und eine gegenüberliegende zweite Seite (72) aufweist, wobei sich die ersten und zweiten Seiten (70, 72) im Wesentlichen parallel zu der Hauptebene (P) erstrecken,
wobei das Entkopplungssystem (16) ferner Haltemittel (28) umfasst, welche dazu geeignet sind, in Translation den Zwischenträger (24) bezüglich der Befestigungsplatte (22) gemäß einer Erstreckungsrichtung (Z) zu blockieren, welche senkrecht zu der Hauptebene (P) ist, **dadurch gekennzeichnet, dass** die Befestigungsplatte (22) einen Haltekäfig (36) umfasst, wobei der Haltekäfig (36) eine Aufnahmenut (58) definiert, welche sich gemäß der longitudinalen Richtung (X) der Hauptebene (P) erstreckt, und in welcher wenigstens teilweise der Zwischenträger (24) aufgenommen ist, wobei der Haltekäfig (36) in C-Form gemäß einer Ebene vorliegt, welche durch eine transversale Richtung (Y) der Hauptebene (P) und durch die Erstreckungsrichtung (Z) definiert ist.

2. Entkopplungssystem (16) nach Anspruch 1, wobei der Haltekäfig (36) und der Zwischenträger (24) ein Gleitsystem gemäß der longitudinalen Richtung (X) bilden, wobei der Zwischenträger (24) dazu eingerichtet ist, in der Aufnahmenut (58) des Haltekäfigs (36) zu laufen.

3. Entkopplungssystem (16) nach Anspruch 1 oder 2, wobei die Platte (22) ferner zwei Anschlagsmittel (38) umfasst, welche beiderseits des Zwischenträgers (24) gemäß der longitudinalen Richtung (X) angeordnet sind, wobei der Zwischenträger (24) gemäß der longitudinalen Richtung (X) zwischen zwei Endpositionen bewegbar ist, in welchen der Zwischenträger (24) in Anlage gegen das eine bzw. das andere der Anschlagsmittel (38) kommt.

4. Entkopplungssystem (16) nach einem der vorhergehenden Ansprüche, wobei die Platte (22) wenigstens eine Durchgangsöffnung (41) aufweist, welche dazu vorgesehen ist, ein Anbringungsmittel (42) der Platte (22) an der Montagefläche (14) aufzunehmen, wobei die Öffnung (41) in länglicher Form vorliegt.

5. Entkopplungssystem (16) nach einem der vorhergehenden Ansprüche, wobei die Platte (22) und der Zwischenträger (24) aus einem metallischen Material hergestellt sind, vorzugsweise Aluminium.

6. Entkopplungssystem (16) nach einem der vorhergehenden Ansprüche, wobei der Klotz (26) aus einem Polymermaterial hergestellt ist, vorzugsweise aus Kautschuk.

7. Entkopplungsanordnung (10), umfassend:
- eine Komponente (12), welche eine Öffnung aufweist,
- eine Montagefläche (14), und
- ein Entkopplungssystem (16) nach einem der Ansprüche 1 bis 6, wobei die Befestigungsplatte (22) an der Montagefläche (14) befestigt ist,
wobei die Entkopplungsanordnung (10) ferner ein Befestigungsmittel (18) der Komponente (12) an dem Entkopplungssystem (16) umfasst, wobei das Befestigungsmittel (18) durch die Öffnung der Komponente (12) hindurch verläuft und in der Aufnahme (27) des Klotzes (26) aufgenommen ist.

8. Anordnung (10) nach Anspruch 7, wobei eines aus der Komponente (12) und der Montagefläche (14) ein Karosserieelement eines öffentlichen Transportfahrzeugs ist und das andere aus der Komponente (12) und der Montagefläche (14) ein Innenausstattungselement des Fahrzeugs ist.

9. Verfahren zum Montieren einer Entkopplungsanordnung (10) nach Anspruch 7 oder 8, umfassend die folgenden Schritte:
- Befestigen der Komponente (12) an dem Klotz (26) durch Einsetzen des Befestigungsmittels (18) in das Innere der Aufnahme (27) des Klotzes (26); und
- Befestigen der Befestigungsplatte (22) an der Montagefläche (14).

## Claims

1. System (16) for uncoupling vibrations between a component (12) and a mounting surface (14), the uncoupling system (16) comprising:
- a fastening plate (22) configured to be fastened to the mounting surface (14), the plate (22) having a first face (30) intended to be placed facing the mounting surface (14) and an opposite second face (32), said faces (30, 32) extending substantially parallel to a main plane (P), and
- an uncoupling stud (26) disposed facing the second face (32) of the plate (22) and wherein a housing (27) intended to receive a fastening means (18) for fastening the component (12) to the uncoupling system (16) is arranged, the stud (26) being made of a material capable of damping vibrations of the fastening means (18),
the uncoupling system (16) further comprises an intermediate support (24) on which the uncoupling stud (26) is fastened, the intermediate support (24) having a bottom wall disposed on the second face (32) of the fastening plate (22), the intermediate support (24) being mounted movable in translation relative to the fastening plate (22) along a longitudinal direction (X) of the main plane (P), the intermediate support (24) comprising a plate (68) having a first face (70) intended to be placed facing the plate (22) and an opposite second face (72), said first and second faces (70, 72) extending substantially parallel to the main plane (P),
the uncoupling system (16) further comprising retention means (28) capable of blocking the rotation of the intermediate support (24) relative to the fastening plate (22) along an extension direction (Z) normal to the main plane (P), **characterised in that** the fastening plate (22) comprises a retention cage (36), the retention cage (36) defining a receiving groove (58) extending along the longitudinal direction (X) of the main plane (P) and wherein the intermediate support (24) is received at least partially, the retention cage (36) being C-shaped along a plane defined by a transverse direction (Y) of the main plane (P) and by the extension direction (Z).

2. Uncoupling system (16) according to claim 1, wherein the retention cage (36) and the intermediate support (24) form a slide system along the longitudinal direction (X), the intermediate support (24) being configured to slide in the receiving groove (58) of the retention cage (36).

3. Uncoupling system (16) according to claim 1 or 2, wherein the plate (22) further comprises two stop means (38) disposed on either side of the intermediate support (24) along the longitudinal direction (X), the intermediate support (24) being movable along the longitudinal direction (X) between two end positions wherein the intermediate support (24) bears against one, respectively the other, of the stop means (38).

4. Uncoupling system (16) according to any one of the preceding claims, wherein the plate (22) has at least one through orifice (41) intended to receive an attachment means (42) of the plate (22) to the mounting surface (14), the orifice (41) being of oblong shape.

5. Uncoupling system (16) according to any one of the preceding claims, wherein the plate (22) and the intermediate support (24) are made of metallic material, preferably aluminium.

6. Uncoupling system (16) according to any one of the preceding claims, wherein the stud (26) is made of polymer material, preferably rubber.

7. Uncoupling assembly (10) comprising:
- a component (12) having an opening,
- a mounting surface (14), and
- an uncoupling system (16) according to any one of claims 1 to 6, the fastening plate (22) being fastened to the mounting surface (14),
the uncoupling assembly (10) further comprising a means (18) for fastening the component (12) to the uncoupling system (16), the fastening means (18) passing through the opening of the component (12) and being received in the housing (27) of the stud (26).

8. Assembly (10) according to claim 7, wherein one of the component (12) and the mounting surface (14) is a body element of a public transport vehicle and the other of the component (12) and the mounting surface (14) is an interior trim element of said vehicle.

9. Method for assembling an uncoupling assembly (10) according to claim 7 or 8, comprising the following steps:
- fastening the component (12) to the stud (26) by inserting the fastening means (18) inside the housing (27) of the stud (26); and
- fastening the fastening plate (22) to the mounting surface (14).
